# EUROPÄISCHE PATENTANMELDUNG

(11) **EP 1 253 789 A2**
(43) Veröffentlichungstag der Anmeldung: **30.10.2002**
(21) Anmeldenummer: 02360098.4
(22) Anmeldetag: 22.03.2002
(51) Int. Cl.: H04Q 3/00

(54) **Verfahren zur Vermeidung von überlastsituationen in einem Fernsprechnetz**

(30) Priorität: 10.04.2001 DE 10117954
(71) Anmelder: ALCATEL, 75008 Paris (FR)
(72) Erfinder: Weik, Hartmut, 70195 Stuttgart (DE); Lautenschlager, Wolfgang, 71287 Weissach-Flacht (DE)
(74) Vertreter: Brose, Gerhard

(57) **Zusammenfassung**

Die Erfindung betrifft ein Verfahren zur Vermeidung von Überlastsituationen in einem Fernsprechnetz (TN), die bei Auftreten einer außergewöhnlichen Situation, insbesondere einer Katastrophe oder eines Krisenfalles, durch vermehrte Anrufversuche von Teilnehmern (TNA, TNB, TNC) hervorgerufen werden, bei welchem eine Aktivierung von Prüfeinrichtungen erfolgt, welche zur Folge hat, dass nur noch bestimmte Verbindungen hergestellt werden, wobei Rufnummern von Teilnehmern (TNA, TNB, TNC) (oder Einrichtungen) des Fernsprechnetzes (TN) oder eines Teilnetzes (STN) definiert werden, die während einer solchen Situation einen Fernsprechanruf vornehmen dürfen oder die als Ziel eines Fernsprechanrufs gewählt werden dürfen und wobei eine Prüfung stattfindet, ob die Rufnummer eines anrufenden Teilnehmers (TNA, TNB, TNC) oder die Rufnummer des von diesem Teilnehmer angerufenen Teilnehmers (TNA, TNB, TNC) eine der jeweils definierten Rufnummern darstellt und eine Verbindung zwischen diesen Teilnehmern (TNA, TNB, TNC) nur bei positivem Prüfergebnis einer genannten Prüfung aufgebaut wird sowie Fernsprechnetz, Vermittlungsstelle, Kontrolleinrichtung und Programmmodul hierfür.

## Beschreibung

Die Erfindung betrifft ein Verfahren zur Vermeidung von Überlastsituationen in einem Fernsprechnetz nach dem Oberbegriff des Anspruchs 1, ein Fernsprechnetz nach dem Oberbegriff des Anspruchs 7, eine Vermittlungsstelle, eine Kontrolleinrichtung und ein Programmmodul zum Ablauf in der Kontrolleinrichtung.

Öffentliche Fernsprechnetze und auch abgeschlossene Sondernetze, beispielsweise Netze für militärische Zwecke, werden in der Regel so dimensioniert, dass sie ein bestimmtes maximales Kommunikationsaufkommen bewältigen können. Dieses maximale Kommunikationsaufkommen kann tageszeitliche und/oder datumsabhängige Variationen dergestalt berücksichtigen, dass voraussehbare Spitzenanforderungen entweder jederzeit oder zu einem bestimmten Prozentsatz der Zeit, beispielsweise zu 95 Prozent, bewältigt werden können. Wenn jedoch unvorhersehbare Ereignisse auftreten, beispielsweise die Aufforderung zur telephonischen Teilnahme an einem Preisausschreiben aus einer populären Fernsehsendung heraus oder bei Ausbrechen einer Naturkatastrophe, so können die daraus entstehenden Kommunikationsanforderungen an das Fernsprechnetz dessen Kapazität schnell überschreiten.

Es sind dazu Verfahren bekannt, bei denen nach Ausrufen eines Ausnahmezustands, beispielsweise beim Auftreten einer Naturkatastrophe oder beim Auftreten einer politischen Krise, nur noch von ausgewählten (Fernsprech-) Anschlüssen, beispielsweise öffentliche Telefone, oder von ausgewählten Einrichtungen aus Zugang zum Fernsprechnetz gewährt wird. Alle übrigen Anschlüsse können dann nur als Ziel eines Fernsprechanrufs dienen, d.h. Anrufe von diesen Anschlüssen aus werden im Fernsprechnetz überhaupt nicht mehr angenommen.

Weiter ist zur Vermeidung von Engpässen aus Gründen von unvorhersehbaren Ereignissen ein dynamisches Verfahren bekannt, bei dem Netzwerkknoten, die von einer Überlast betroffen sind, bestimmte Drosselungsverfahren anwenden. Dazu werden in bestimmten teilnehmernahen Netzknoten oder Vermittlungsstellen kontinuierlich Lastmessungen vorgenommen. Wird in einem solchen Netzknoten, beispielsweise hervorgerufen durch einen Massenanruf, eine bestimmte Last überschritten, so werden andere, teilnehmerferne Netzknoten, welche von der Überlast betroffen sind oder betroffen sein könnten, aufgefordert, diesen Kommunikationsverkehr um eine bestimmte Drosselungsrate zu reduzieren.

Das erste eingangs beschriebene Verfahren der anschlussbezogenen Auswahl von bevorzugten Teilnehmern hat jedoch den Nachteil, dass es nur im Festnetz angewandt werden kann. Einhergehend mit der zunehmenden Verbreitung der Mobilfunknetze werden immer mehr öffentliche Telefone abgebaut. Außerdem sind zunehmend im Krisen- oder Katastrophenfall wichtige, insbesondere mobile Einrichtungen oder Teilnehmer bevorzugt oder ausschließlich mit einem Mobilfunkendgerät erreichbar. Auch bei der ausschließlichen Betrachtung des Festnetzes ist dieses Verfahren wegen mangelnder Flexibilität nicht zufriedenstellend, da Änderungen von berechtigten Rufnummern nur dezentral, beispielsweise durch aufwendige Konfigurationsänderungen in Ortsvermittlungsstellen, vorgenommen werden können. Das zweite eingangs beschriebene Verfahren bietet zwar den Vorteil, dynamisch auf eine entstehende Überlast zu reagieren, es ist jedoch keine für den Katastrophenfall gewünschte Bevorzugung wählbarer Einrichtungen oder Teilnehmer möglich.

Der Erfindung liegt die Aufgabe zugrunde, ein Verfahren und geeignete Mittel zu schaffen, die es ermöglichen, Teilnehmer sowohl eines Fernsprechnetzes mit ortfesten Anschlüssen als auch eines Mobilfunknetzes flexibel bestimmen zu können, die in einem Krisen- oder Katastrophenfall Anrufe tätigen oder Anrufe entgegennehmen dürfen.

Erfindungsgemäß wird diese Aufgabe durch ein Verfahren nach der Lehre des Anspruchs 1, einen Fernsprechnetz nach der Lehre des Anspruchs 7, eine Vermittlungsstelle nach der Lehre des Anspruchs 8, eine Kontrolleinrichtung nach der Lehre des Anspruchs 9 sowie ein Programmmodul nach der Lehre des Anspruchs 10 gelöst.

Grundgedanke der Erfindung ist es, eine beim Auftreten einer außergewöhnlichen Situation drohende Überlast in einem Fernsprechnetz dadurch zu vermeiden, dass in einer solchen Situation eine Systemumschaltung erfolgt, welche zur Folge hat, dass nur ein Teil aller gewünschten Verbindungen hergestellt wird. Dazu werden Rufnummern von Teilnehmern des Fernsprechnetzes oder eines Teilnetzes definiert, die während einer solchen Situation einen Fernsprechanruf vornehmen dürfen oder die als Ziel eines Fernsprechanrufs gewählt werden dürfen. Vor einem Verbindungsaufbau wird dann geprüft, ob die Rufnummer eines anrufenden Teilnehmers oder die Rufnummer des von diesem Teilnehmer angerufenen Teilnehmers eine der jeweils definierten Rufnummern darstellt. Eine Verbindung zwischen diesen Teilnehmern wird nur bei positivem Prüfergebnis der genannten Prüfung aufgebaut.

Weitere vorteilhafte Ausgestaltungen der Erfindung sind den abhängigen Ansprüchen und der Beschreibung zu entnehmen.

Das erfindungsgemäße Verfahren und die erforderlichen Mittel werden hier anhand einer Realisierung im sogenannten Intelligenten Netz (IN) erläutert. Diese Realisierung wird hier bevorzugt, da sie weitgehend auf genormten Schnittstellen und Protokollen, insbesondere sogenannten INAP-Operationen, mittels derer Einrichtungen des Intelligenten Netzes miteinander kommunizieren, aufgebaut werden kann. Jedoch lässt sich die Erfindung auch außerhalb des Intelligenten Netzes, beispielsweise durch entsprechende funktionale Erweiterungen bestehender digitaler Vermittlungseinrichtungen realisieren.

Zwei wesentliche Einrichtungen eines Intelligenten Netzes bilden der sogenannte Service Switching Point (SSP) und der sogenannte Service Control Point (SCP). Der Service Switching Point ist eine digitale Vermittlungsstelle, die bei einem Anruf eines Teilnehmers den Aufruf eines Dienstes des Intelligenten Netzes, im folgenden IN-Dienst genannt, erkennt und dem Service Control Point die Möglichkeit gibt, diesen Anruf zu steuern.

Während die sogenannten Service Switching Funktionen des Service Switching Points dezentraler Art und heute in der Regel in jede Ortvermittlungsstelle integriert sind, sind die sogenannten Service Control Funktionen des Service Control Points von zentraler Art. Der Service Control Point großer Netzbetreiber wird dabei durch eine Anzahl untereinander vernetzter Rechner gebildet, die beispielsweise über ein leistungsfähiges sogenanntes Local Area Network (LAN) miteinander kommunizieren.

Im folgenden wird die Erfindung unter Zuhilfenahme der Zeichnung weiter erläutert:

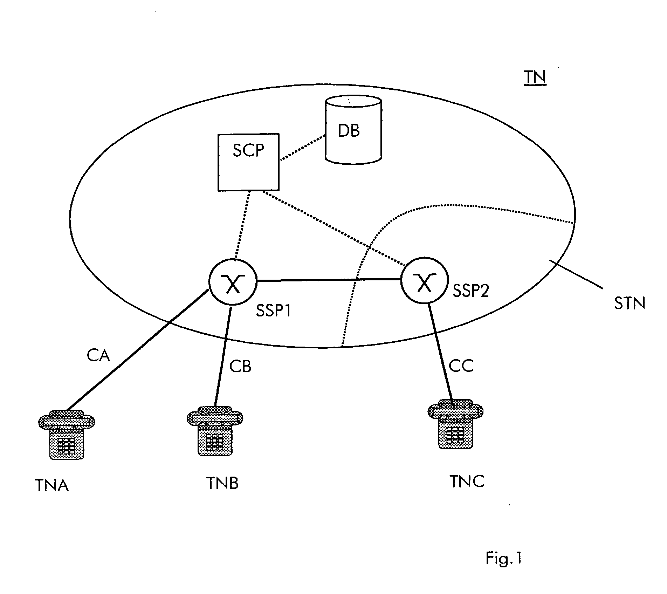

- Fig.1: zeigt beispielhaft ein erfindungsgemäßes Fernsprechnetz mit erfindungsgemäßen Vermittlungsstellen und einer erfindungsgemäßen Kontrolleinrichtung zur Durchführung des erfindungsgemäßen Verfahrens.

Fig.1 zeigt ein Fernsprechnetz TN mit einer ersten Vermittlungsstelle SSP1, einer zweiten Vermittlungsstelle SSP2 einem Service Control Point SCP, im folgenden Kontrolleinrichtung SCP genannt, und einer Datenbank DB. Die Vermittlungsstellen SSP1, SSP2 stellen digitale Ortsvermittlungsstellen mit integrierten Service Switching Funktionen dar. Die Vermittlungsstellen SSP1, SSP2 und die Datenbank DB sind mit der Kontrolleinrichtung SCP, durch gestrichelte Linien symbolisiert, verbunden. Mit der ersten Vermittlungsstelle SSP1 der untereinander verbundenen Vermittlungsstellen SSP1 und SSP2 sind ein erster Teilnehmer TNA über eine erste Leitung CA und ein zweiter Teilnehmer TNB über eine zweite Leitung CB verbunden. Die zweite Vermittlungsstelle SSP2 ist mit einem dritten Teilnehmer TNC über eine dritte Leitung CC verbunden. Die gestrichelt eingezeichneten Verbindungen stellen Signalisierungsverbindungen und die übrigen Verbindungen stellen Nutzverbindungen, d.h. Verbindungen über die Gesprächsinformationen der Teilnehmer geführt werden, dar. Weiter ist ein Teilnetz STN des Fernsprechnetzes TN abgegrenzt, welches die erste Vermittlungsstelle SSP2 aufweist.

Im folgenden wird keine sprachliche Unterscheidung zwischen Teilnehmern und den Endgeräten von Teilnehmern vorgenommen. Außerdem kann ein Teilnehmer auch eine Einrichtung, beispielsweise eine Behörde oder ein Krankenhaus darstellen.

Zunächst soll davon ausgegangen werden, dass die Rufnummern der anrufenden Teilnehmer, im folgenden beispielhaft die Rufnummer des ersten Anrufers TNA, sogenannte IN-Rufnummern darstellen, d.h. Rufnummern, welche in den Vermittlungsstellen SSP1 und SSP2 jeweils einen IN-Dienst triggern oder initiieren können. Zu normalen Zeiten bleiben die erfindungsgemäßen Einrichtungen zur Vermeidung von Überlastsituationen passiv. Wenn nun eine Katastrophe eintritt, so werden diese Einrichtungen aktiviert, beispielsweise durch manuelle Eingabe in eine zentrale Netzwerkmanagementeinrichtung. Sämtliche Vermittlungsstellen SSP1 und SSP2 des Fernsprechnetzes TN oder die Vermittlungsstellen eines von der Katastrophe betroffenen Gebiets oder Teilnetzes STN werden über das Vorliegen einer Katastrophe informiert. Von diesem Zeitpunkt an wird an wird von diesen Vermittlungsstellen SSP1 und SSP2 für ankommende Anrufe kein Verbindungsaufbau mehr vorgenommen, ohne dass vorher eine Berechtigungsprüfung durchgeführt wird.

In einer ersten Variante wird ausschließlich die Berechtigung von anrufenden Teilnehmern oder die Berechtigung, von einem bestimmten Endgerät aus anzurufen geprüft. Wenn nun beispielsweise der erste Teilnehmer TNA den zweiten Teilnehmer TNB anruft, so übergibt die erste Vermittlungsstelle SSP1, an welche der erste Teilnehmer TNA angeschlossen ist, die mit der Anrufsignalisierung übermittelte Rufnummer des ersten Teilnehmers TNA an die Kontrolleinrichtung SCP. Die Kontrolleinrichtung SCP konsultiert zur Überprüfung, ob der Teilnehmer TNA dieser Rufnummer eine Anrufberechtigung hat, die Datenbank DB. In dieser Datenbank DB ist eine Liste mit sämtlichen Rufnummern berechtigter Teilnehmer enthalten. Bei positiven Prüfergebnis, d.h. bei Auffinden der Rufnummer in der Liste der berechtigten Teilnehmer, weist die Kontrolleinrichtung SCP die erste Vermittlungsstelle SSP1 an, die gewünschte Verbindung zum zweiten Teilnehmer TNB herzustellen. Bei negativem Prüfergebnis weist die Kontrolleinrichtung SCP die erste Vermittlungsstelle SSP1 an, seine Verbindung zum ersten Teilnehmer TNA auszulösen. Einrichtungen, von denen aus Anrufe in einem Katastrophenfall getätigt werden dürfen, können beispielsweise alle öffentliche Einrichtungen oder ausgewählte öffentliche Einrichtungen wie Krankenhäuser, Feuerwehr, Katastrophenzentren etc. und öffentliche Fernsprecher sein. Zusätzlich können auch bestimmte Teilnehmer, beispielsweise Ärzte, Polizisten etc. ausgewählt werden.

In einer zweiten Variante wird ausschließlich die Berechtigung geprüft ob ein bestimmter Teilnehmer oder eine bestimmte Einrichtung angerufen werden darf. Wenn nun beispielsweise der erste Teilnehmer TNA den zweiten Teilnehmer TNB anruft, so übergibt die erste Vermittlungsstelle SSP1, an welche der erste Teilnehmer TNA angeschlossen ist, die mit der Anrufsignalisierung übermittelte Rufnummer des gerufenen zweiten Teilnehmers TNB an die Kontrolleinrichtung SCP. Analog zur ersten Variante prüft die Kontrolleinrichtung SCP, ob der Teilnehmer TNB dieser Rufnummer eine Anrufberechtigung hat. Bei positiven Prüfergebnis, d.h. bei Auffinden der Rufnummer in der Liste der berechtigten Teilnehmer, weist die Kontrolleinrichtung SCP die erste Vermittlungsstelle SSP1 an, die gewünschte Verbindung zum zweiten Teilnehmer TNB herzustellen. Bei negativem Prüfergebnis weist die Kontrolleinrichtung SCP die erste Vermittlungsstelle SSP1 an, seine Verbindung zum ersten Teilnehmer TNA auszulösen. Ausgewählte Einrichtungen oder Teilnehmer, die angerufen werden dürfen, können die unter der ersten Variante genannten Einrichtungen sein. Zur beschleunigten Prüfung kann auch vorgesehen werden, dass Notrufnummern, beispielsweise in Deutschland die Rufnummern 110 und 112, ohne Umweg über die Kontrolleinrichtung SCP direkt in den Vermittlungsstellen SSP1 und SSP2 erkannt werden und damit unverzüglich die entsprechenden Verbindungen aufgebaut werden kann. Die erste und zweite Variante haben den Nachteil, dass die Berechtigungsprüfung entweder nur auf Seiten der Anrufer oder auf Seiten der Anrufenden geprüft werden. Es kann aber von aber von großem Vorteil sein sein, wenn einerseits nur einem kleinen Teilnehmerkreis eine unbeschränkte aktive Anruferlaubnis und allen übrigen Teilnehmern eine Anruferlaubnis nur zu ausgewählten Zielen einräumen kann.

Dazu werden in einer bevorzugten dritten Variante die in den vorangehenden Varianten beschriebenen Prüfungen kombiniert. Es findet dazu zunächst eine Prüfung statt, ob eine aktive Anruferlaubnis eines anrufenden Teilnehmers vorliegt. Wenn keine aktive Anruferlaubnis vorliegt, wird im folgenden Schritt geprüft, ob das Anrufziel angerufen werden darf. Nur wenn beide Prüfungen negativ verlaufen, wird die gewünschte Verbindung verweigert. Wenn nun beispielsweise der erste Teilnehmer TNA den zweiten Teilnehmer TNB anruft, so übergibt die erste Vermittlungsstelle SSP1, an welche der erste Teilnehmer TNA angeschlossen ist, die mit der Anrufsignalisierung übermittelte Rufnummern sowohl des anrufenden ersten Teilnehmers TNA als auch des angerufenen zweiten Teilnehmers TNB an die Kontrolleinrichtung SCP. Genau wie in der ersten Variante prüft die Kontrolleinrichtung SCP, ob der Teilnehmer TNA dieser Rufnummer eine Anrufberechtigung hat. Bei positiven Prüfergebnis, d.h. bei Auffinden der Rufnummer in der ersten Liste berechtigter aktiver Teilnehmer, weist die Kontrolleinrichtung SCP die erste Vermittlungsstelle SSP1 an, die gewünschte Verbindung zum zweiten Teilnehmer TNB herzustellen. Bei negativem Prüfergebnis prüft Kontrolleinrichtung SCP, ob die Rufnummer des angerufenen Teilnehmers TNB in einer zweiten Liste von Rufnummern berechtigter passiver Teilnehmer enthalten ist. Bei positivem Prüfergebnis weist die Kontrolleinrichtung SCP die erste Vermittlungsstelle SSP1 ebenfalls an, die gewünschte Verbindung zum zweiten Teilnehmer TNB herzustellen. Bei negativem Prüfergebnis weist die Kontrolleinrichtung SCP die erste Vermittlungsstelle SSP1 an, seine Verbindung zum ersten Teilnehmer TNA auszulösen.

Die Prüfungen können zur Entlastung der (zentralen) Kontrolleinrichtung SCP ganz oder teilweise unmittelbar in den Vermittlungsstellen SSP1 und SSP2 durchgeführt werden. Besonders vorteilhaft ist eine zweistufige Prüfung der Anrufberechtigung. So wird beispielsweise bei einem Anruf des ersten Teilnehmers TNA in einer ersten Stufe in der ersten Vermittlungsstelle SSP1 geprüft, ob die Rufnummer dieses Teilnehmers TNA in einer lokal gespeicherten Rufnummernliste enthalten ist. Bei positivem Prüfergebnis wird dann unmittelbar die gewünschte Verbindung hergestellt. Erst bei negativem Prüfergebnis wird die Kontrolleinrichtung SCP konsultiert, die das Prüfverfahren dann in einer zweiten Stufe gemäß der ersten oder dritten Variante fortsetzt. Analog kann zusätzlich oder statt dessen auch mit einer Prüfung der angerufenen Rufnummern verfahren werden. Es ist weiter möglich, dass nur dann eine Prüfung in einer zweiten Stufe erfolgt, wenn die entsprechende Vermittlungsstelle SSP1 oder die Kontrolleinrichtung SCP nicht überlastet ist. Bei Überlast erfolgt dann bei negativem Prüfungsergebnis in der ersten Stufe unmittelbar die Auslösung der Verbindung.

Eine Prüfung in zwei Stufen ist auch vorteilhaft, wenn nur ein lokales Gebiet oder Teilnetz STN von einer Ausnahmesituation betroffen ist. In diesem Fall findet bei einem Anruf beispielsweise eines ersten Teilnehmers TNA eine erste Prüfung in der Vermittlungsstelle SSP1 statt, ob die Zielrufnummer in das Teilnetz STN führt. Falls die Zielrufnummer eine Rufnummer des zweiten außerhalb des Teilnetzes STN befindlichen Teilnehmer TNB darstellt, so wird die gewünschte Verbindung ohne weitere Prüfung hergestellt. Falls die Zielrufnummer eine Rufnummer des dritten innerhalb des Teilnetzes STN befindlichen Teilnehmer TNC darstellt, so findet eine zweite Prüfung in der Kontrolleinrichtung SCP statt. Zur ersten Prüfung muss dabei nur ein Teil der Rufnummer des angerufenen Teilnehmers, beispielsweise die Ortsvorwahl aufgelöst werden. Zur zweiten Prüfung wird der Rest dieser Rufnummer und/oder die Rufnummer des anrufenden Teilnehmers TNA aufgelöst.

Einer der im Intelligenten Netz angebotenen IN-Dienste betrifft eine zeitabhängige Zielansteuerung; d.h. ein Teilnehmer, der einen solchen Dienst eingerichtet hat, ist unter einer einheitlichen Rufnummer zeitabhängig an verschiedenen definierten Anschlüssen erreichbar. Bei der Prüfung der passiven Anrufberechtigung kann das Verfahren zu diesem IN-Dienst mit einem der beschriebenen Verfahren der vorhergehenden Varianten verknüpft werden. In der in der zweiten und dritten Variante genannten zweiten Liste von Rufnummern berechtigter passiver Teilnehmer ist dazu beispielsweise die einheitliche Rufnummer des zweiten Teilnehmers mit einer passiven Anrufberechtigung enthalten. Bei Anruf dieser Rufnummer in einem Katastrophenfall löst die Kontrolleinrichtung SCP diese Rufnummer in eine entsprechende physikalische Rufnummer auf und teilt diese Rufnummer der ersten Vermittlungsstelle SSP1 zur Herstellung einer Verbindung zum diesem zweiten Teilnehmer TNB mit.

Bisher wurde davon ausgegangen, dass die Rufnummern der anrufenden Teilnehmer IN-Rufnummern darstellen. Es ist in einer weiteren Ausführung auch möglich, dass nur vorausgesetzt wird, dass Teilnehmer mit einer aktiven Anrufberechtigung eine IN-Rufnummer aufweisen. Da eine Prüfung der aktiven Anrufsberechtigung nur für IN-Rufnummern vorgenommen werden kann, werden bei einer ausschließlichen Lösung mittels Einrichtungen und Verfahren des Intelligenten Netzes alle Verbindungswünsche von Teilnehmern anderer Rufnummern ungeprüft zurückgewiesen. Allerdings ist es möglich, die Prüfung der genannten ersten Stufe innerhalb der Vermittlungsstelle mittels proprietärer Funktionen durchzuführen. So können auch ausgewählte Teilnehmer ohne IN-Rufnummer Verbindungen aufgebaut werden.

Statt einer manuellen Aktivierung der erfindungsgemäßen Einrichtungen zur Vermeidung von Überlastsituationen kann auch eine automatische Aktivierung erfolgen. Dazu können in den Vermittlungsstellen Lastmessungen vorgenommen werden, die in einer Steuerungseinrichtung ausgewertet werden. Wenn diese Lastmessungen beispielsweise eine dramatische Zunahme von Anrufen in einer bestimmten Region oder einem bestimmten Teilnetz ergeben, so werden die genannten Einrichtungen automatisch aktiviert.

In einer weiteren Variante werden für verschiedene Arten von Krisen oder Katastrophen verschiedene Teilnehmerlisten angelegt. So kann es sinnvoll sein, im Fall einer Naturkatastrophe andere Teilnehmer zu bevorrechtigen als in einer politischen Krisensituation.

Die beschriebenen Verfahren können sowohl im Festnetz wie in Mobilfunknetzen, beispielsweise dem GSM-Netz oder anderen zellulären Mobilfunknetzen realisiert werden.

## Patentansprüche

1. Verfahren zur Vermeidung von Überlastsituationen in einem Fernsprechnetz (TN) oder einem Teilnetzes (STN) des Fernsprechnetzes (TN), die bei Auftreten einer außergewöhnlichen Situation, insbesondere einer Katastrophe oder eines Krisenfalles, durch vermehrte Anrufversuche von Teilnehmern (TNA) hervorgerufen werden, wobei
• eine Aktivierung von Prüfeinrichtungen (SSP, SCP) erfolgt, welche zur Folge hat, dass nur noch bestimmte Verbindungen hergestellt werden,
**dadurch gekennzeichnet, dass**
• Kriterien für jeweils die Rufnummer eines anrufenden Teilnehmers (TNA) und die Rufnummer eines angerufenen Teilnehmers (TNB, TNC) festgelegt werden, die eine Verbindungsherstellung auch in einer außergewöhnlichen Situation erlauben,
• eine Prüfung stattfindet, ob die Rufnummer eines anrufenden Teilnehmers (TNA) und die Rufnummer des von diesem Teilnehmer angerufenen Teilnehmers (TNB, TNC) die genannten Kriterien erfüllen und
• eine Verbindung zwischen diesen Teilnehmern (TNA, TNB; TNA, TNC) nur bei positivem Prüfergebnis der genannten Prüfung aufgebaut wird.

2. Verfahren nach Anspruch 1, **dadurch gekennzeichnet, dass** zur Definition der Kriterien Rufnummern von Teilnehmern (TNA), die einen Fernsprechanruf vornehmen dürfen oder Rufnummern von Teilnehmern (TNB, TNC), die als Ziel eines Fernsprechanrufs gewählt werden dürfen, festgelegt werden.

3. Verfahren nach Anspruch 1, **dadurch gekennzeichnet, dass** die Prüfung in zwei Stufen durchgeführt wird, wobei die Prüfung in einer ersten Stufe zunächst in einer Ortsvermittlungsstelle (SSP1, SSP2) durchgeführt wird und nur bei negativem Prüfergebnis eine zweite Prüfung in einer zentralen Kontrolleinrichtung (SCP) durchgeführt wird.

4. Verfahren nach Anspruch 1, **dadurch gekennzeichnet, dass** für verschiedene Arten von außergewöhnlichen Situationen verschiedene Teilnehmerkreise definiert werden, deren Rufnummern jeweils Quellen und/oder Ziele von Fernsprechanrufen sein dürfen.

5. Verfahren nach Anspruch 1, **dadurch gekennzeichnet, dass** die Aktivierung durch manuelle Eingabe erfolgt.

6. Verfahren nach Anspruch 1, **dadurch gekennzeichnet, dass** die Aktivierung automatisch dann erfolgt, wenn bestimmte Lastparameter überschritten werden.

7. Fernsprechnetz (TN) mit Einrichtungen zur Vermeidung von Überlastsituationen, **dadurch gekennzeichnet, dass** diese Einrichtungen folgende Mittel aufweisen:
• Speichermittel zum Speichern von Kriterien für jeweils die Rufnummern von anrufenden Teilnehmern (TNA) und die Rufnummern von angerufenen Teilnehmern (TNB, TNC),
• Prüfungsmittel zum Prüfen der während einer Anrufsignalisierung übergebenen Rufnummer des anrufenden Teilnehmers (TNA) oder der Rufnummer des angerufenen Teilnehmers (TNB, TNC) daraufhin, ob die genannten Kriterien erfüllt sind und
• Aktivierungsmittel zum Aktivieren und deaktivieren der genannten Prüfungsmittel.

8. Vermittlungsstelle (SSP1) für ein Fernsprechnetz (TN), mit:
• Sendemitteln zum Übergeben der während einer Anrufsignalisierung übergebenen Rufnummer des anrufenden Teilnehmers (TNA) oder der Rufnummer des angerufenen Teilnehmers (TNB, TNC) an eine Kontrolleinrichtung (SCP),
• Empfangsmitteln zum Empfang einer Weiterbehandlungsanweisung von einer Kontrolleinrichtung (SCP), mit der Information, ob die entsprechende Verbindung hergestellt werden soll oder ob der Anruf beendet werden soll und
• Ausführungsmitteln zum Ausführen der Weiterbehandlungsanweisung.

9. Kontrolleinrichtung (SCP) für ein Fernsprechnetz (TN), mit:
• Empfangsmitteln zum Empfang der Rufnummer eines anrufenden Teilnehmers (TNA) oder der Rufnummer eines angerufenen Teilnehmers (TNB, TNC) von einer Vermittlungsstelle (SSP1),
• Prüfungsmitteln zum Prüfen der Rufnummer des anrufenden oder der Rufnummer des angerufenen Teilnehmers (TNA, TNB, TNC) daraufhin, ob eine dieser Rufnummern Kriterien erfüllt, welche eine Verbindungsherstellung in einer außergewöhnlichen Situation erlaubt und
• Sendemitteln zum Übergeben einer Weiterbehandlungsanweisung an die Vermittlungsstelle (SSP1), mit der Information, ob die entsprechende Verbindung hergestellt werden soll oder ob der Anruf beendet werden soll.

10. Programmmodul zum Ablauf in einer Kontrolleinrichtung (SCP) für ein Fernsprechnetz (TN), mit Mitteln zur Steuerung folgender Schritte:
• Empfang der Rufnummer eines anrufenden Teilnehmers (TNA) oder der Rufnummer eines angerufenen Teilnehmers (TNB, TNC) von einer Kontrolleinrichtung (SSP1),
• Prüfen der Rufnummer des anrufenden oder der Rufnummer des angerufenen Teilnehmers (TNA, TNB) daraufhin, ob eine dieser Rufnummern Kriterien erfüllt, welche eine Verbindungsherstellung in einer außergewöhnlichen Situation erlaubt und
• Bestimmung einer Weiterbehandlungsanweisung mit der Information, ob die entsprechende Verbindung hergestellt werden soll oder ob der Anruf beendet werden soll.
